# EUROPEAN PATENT SPECIFICATION

(11) **EP 4 422 229 B1**
(45) Date of publication and mention of the grant of the patent: **24.09.2025**
(21) Application number: 24154029.3
(22) Date of filing: 25.01.2024
(51) Int. Cl.: H04W 4/70, H04B 5/00, H04B 7/06, H04W 4/80, G06K 7/10, G06K 19/07

(54) **APPARATUS, METHOD, AND COMPUTER PROGRAM**
VORRICHTUNG, VERFAHREN UND COMPUTERPROGRAMM
APPAREIL, PROCÉDÉ ET PROGRAMME INFORMATIQUE

(30) Priority: 23.02.2023 GB 202302571
(43) Date of publication of application: 28.08.2024
(73) Proprietor: Nokia Technologies Oy, 02610 Espoo (FI)
(72) Inventor: SVENDSEN, Simon, 9000 Aalborg (DK); HARREBEK, Johannes, 9000 Aalborg (DK); BARBU, Oana-Elena, 9220 Aalborg (DK); VEJLGAARD, Benny, 9260 Gistrup (DK)
(74) Representative: Page White Farrer

(56) References cited:
- EP-A1- 3 951 640
- US-A1- 2008 186 145
- US-A1- 2009 219 141
- US-A1- 2022 300 780

## Description

### Field of the disclosure

The present disclosure relates to apparatuses, methods, and computer programs for transmitting an activation signal in a communication system.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

US2009/219141A1 describes techniques to reduce interference and improve radio frequency identification tag throughput.

### Summary

The invention relates to apparatuses, methods and computer programs as set forth in the claims. It will be understood that aspects of this disclosure falling outside the scope of the claims may not be part of the invention but may be useful to understand the invention.

According to an aspect there is provided an apparatus comprising at least one processor and at least one memory storing instructions that, when executed by the at least one processor, cause the apparatus at least to: receive, from a control unit, a configuration message to transmit an activation signal with phase rotations or without phase rotations; and transmit the activation signal with phase rotations or without phase rotations.

The at least one memory may store instructions that, when executed by the at least one processor, cause the apparatus at least to: transmit, to the control unit, location information indicating that the apparatus has a static or semi-static location.

The at least one memory may store instructions that, when executed by the at least one processor, cause the apparatus at least to: transmit, to the control unit, capability information indicating that the apparatus has capability for transmitting the activation signal with phase rotations.

The at least one memory may store instructions that, when executed by the at least one processor, cause the apparatus at least to: receive, from a control unit, identification information indicating an identifier of another apparatus configured to transmit the activation signal without phase rotations.

The at least one memory may store instructions that, when executed by the at least one processor, cause the apparatus at least to: receive, from the other apparatus, a distance from the apparatus to the other apparatus.

The at least one memory may store instructions that, when executed by the at least one processor, cause the apparatus at least to: determine a distance from the apparatus to the other apparatus.

The at least one memory may store instructions that, when executed by the at least one processor, cause the apparatus at least to: transmit, to the control unit, the distance from the apparatus to the other apparatus.

The at least one memory may store instructions that, when executed by the at least one processor, cause the apparatus at least to: determine a number and/or values of phase rotations based on the distance from the apparatus to the other apparatus.

The at least one memory may store instructions that, when executed by the at least one processor, cause the apparatus at least to: receive, from the other apparatus, a distance from the apparatus to a reflector.

The at least one memory may store instructions that, when executed by the at least one processor, cause the apparatus at least to: determine a distance from the apparatus to a reflector.

The at least one memory may store instructions that, when executed by the at least one processor, cause the apparatus at least to: transmit, to the control unit, the distance from the apparatus to the reflector.

The at least one memory may store instructions that, when executed by the at least one processor, cause the apparatus at least to: determine a number and/or values of phase rotations based on the distance from the apparatus to the reflector.

The at least one memory may store instructions that, when executed by the at least one processor, cause the apparatus at least to: transmit, to the control unit the number of phase rotations.

The at least one memory may store instructions that, when executed by the at least one processor, cause the apparatus at least to: receive, from the control unit, a resource allocation to transmit the activation signal; and transmit the activation signal with phase rotations based on the resource allocation.

The activation signal may be configured to activate a passive tag.

The apparatus may be an activator.

The apparatus may be a user equipment or a fixed wireless access point.

The apparatus may comprise a dipole antenna configured to transmit the activation signal.

According to an aspect there is provided an apparatus comprising means for: receiving, from a control unit, a configuration message to transmit an activation signal with phase rotations or without phase rotations; and transmitting the activation signal with phase rotations or without phase rotations.

According to an aspect there is provided an apparatus comprising circuitry configured to: receive, from a control unit, a configuration message to transmit an activation signal with phase rotations or without phase rotations; and transmit the activation signal with phase rotations or without phase rotations.

According to an aspect there is provided a method comprising: receiving, from a control unit, a configuration message to transmit an activation signal with phase rotations or without phase rotations; and transmitting the activation signal with phase rotations or without phase rotations.

According to an aspect there is provided a computer program comprising computer executable code which when run on at least one processor is configured to: receive, from a control unit, a configuration message to transmit an activation signal with phase rotations or without phase rotations; and transmit the activation signal with phase rotations or without phase rotations.

According to an aspect there is provided an apparatus comprising at least one processor and at least one memory storing instructions that, when executed by the at least one processor, cause the apparatus at least to: transmit, to an activator, a configuration message to transmit an activation signal with phase rotations; and transmit, to another activator, a configuration message to transmit the activation signal without phase rotations.

The at least one memory may store instructions that, when executed by the at least one processor, cause the apparatus at least to: receive, from the activator, location information indicating that the activator has a static or semi-static location; and select the activator to transmit the activation signal with phase rotations.

The at least one memory may store instructions that, when executed by the at least one processor, cause the apparatus at least to: receive, from the activator, capability information indicating that the activator has capability for transmitting the activation signal with phase rotations; and select the activator to transmit the activation signal with phase rotations.

The at least one memory may store instructions that, when executed by the at least one processor, cause the apparatus at least to: receive, from the other activator, location information indicating that the other activator has a static or semi-static location or does not have a static or semi-static location; and select the other activator to transmit the activation signal without phase rotations.

The at least one memory may store instructions that, when executed by the at least one processor, cause the apparatus at least to: receive, from the other activator, capability information indicating that the other activator has capability for transmitting the activation signal with phase rotations or does not have capability for transmitting the activation signal with phase rotations; and select the other activator to transmit the activation signal without phase rotations.

The at least one memory may store instructions that, when executed by the at least one processor, cause the apparatus at least to: transmit, to the activator, identification information indicating an identifier of the other activator.

The at least one memory may store instructions that, when executed by the at least one processor, cause the apparatus at least to: receive, from the activator, the distance from the activator to the other activator; and determine a number and/or values of phase rotations based on the distance from the activator to the other activator.

The at least one memory may store instructions that, when executed by the at least one processor, cause the apparatus at least to: receive, from the activator, a distance from the activator to a reflector; and determine a number and/or values of phase rotations based on the distance from the activator to the reflector.

The at least one memory may store instructions that, when executed by the at least one processor, cause the apparatus at least to: receive, from the activator, a number and/or values of phase rotations.

The at least one memory may store instructions that, when executed by the at least one processor, cause the apparatus at least to: determine a resource allocation to transmit the activation signal based on the number of phase rotations; and transmit, to the activator, the resource allocation.

The at least one memory may store instructions that, when executed by the at least one processor, cause the apparatus at least to: transmit, to the other activator, the resource allocation.

The apparatus may comprise a control unit.

The apparatus may be part of an access network or a core network.

The apparatus may be part of a base station or a location management function.

According to an aspect there is provided an apparatus comprising means for: transmitting, to an activator, a configuration message to transmit an activation signal with phase rotations; and transmitting, to another activator, a configuration message to transmit the activation signal without phase rotations.

According to an aspect there is provided an apparatus comprising circuitry configured to: transmit, to an activator, a configuration message to transmit an activation signal with phase rotations; and transmit, to another activator, a configuration message to transmit the activation signal without phase rotations.

According to an aspect there is provided a method comprising: transmitting, to an activator, a configuration message to transmit an activation signal with phase rotations; and transmitting, to another activator, a configuration message to transmit the activation signal without phase rotations.

According to an aspect there is provided a computer program comprising computer executable code which when run on at least one processor is configured to: transmit, to an activator, a configuration message to transmit an activation signal with phase rotations; and transmit, to another activator, a configuration message to transmit the activation signal without phase rotations.

According to an aspect there is provided an apparatus comprising at least one processor and at least one memory storing instructions that, when executed by the at least one processor, cause the apparatus at least to: determine whether the apparatus has a static or semi-static location; and determine whether to transmit an activation signal with phase rotations based on whether the apparatus has a static or semi-static location.

The at least one memory may store instructions that, when executed by the at least one processor, cause the apparatus at least to: determine whether the apparatus has received a configuration message to transmit the activation signal with phase rotations; and determine whether to transmit the activation signal with phase rotations based on whether the apparatus has received the configuration message to transmit the activation signal with phase rotations.

The at least one memory may store instructions that, when executed by the at least one processor, cause the apparatus at least to: determine that the apparatus has a static or semi-static location; determine that the apparatus has received the configuration message to transmit the activation signal with phase rotations; and transmit the activation signal with phase rotations.

The at least one memory may store instructions that, when executed by the at least one processor, cause the apparatus at least to: determine a number and/or values of phase rotations; and transmit the activation signal with phase rotation based on the number and/or values of phase rotations.

The at least one memory may store instructions that, when executed by the at least one processor, cause the apparatus at least to: determine a wavelength of the activation signal; and determine the number and/or values of phase rotations based on the wavelength of the activation signal.

The at least one memory may store instructions that, when executed by the at least one processor, cause the apparatus at least to: determine a distance from the apparatus to another apparatus configured to transmit the activation signal without phase rotations; and determine the number and/or values of phase rotations based on the distance from the apparatus to the other apparatus.

The at least one memory may store instructions that, when executed by the at least one processor, cause the apparatus at least to: receive a distance from the apparatus to another apparatus configured to transmit the activation signal without phase rotations determined by the other apparatus; and determine the number and/or values of phase rotations based on the distance from the apparatus to the other apparatus.

The at least one memory may store instructions that, when executed by the at least one processor, cause the apparatus at least to: determine a distance from the apparatus to a reflector; and determine the number and/or values of phase rotations based on the distance from the apparatus to the reflector.

The at least one memory may store instructions that, when executed by the at least one processor, cause the apparatus at least to: receive a distance from the other apparatus to a reflector determined by another apparatus configured to transmit the activation signal without phase rotations; and determine the number and/or values of phase rotations based on the distance from the other apparatus to the reflector.

The at least one memory may store instructions that, when executed by the at least one processor, cause the apparatus at least to: determine a maximum distance between the distance from the apparatus to the other apparatus, the distance from the apparatus to the reflector and/or the distance from the other apparatus and the reflector; and determine the number and/or values of phase rotations based on the maximum distance.

The at least one memory may store instructions that, when executed by the at least one processor, cause the apparatus at least to: determine a first number and/or first values of phase rotations when the maximum distance is lower than a first number of wavelengths of the activation signal; determine a second number and/or second values of phase rotations when the maximum distance is greater than the first number wavelengths of the activation signal and lower than a second number of wavelengths of the activation signal; or determine a third number and/or third values of phase rotations when the maximum distance is greater than the second number of wavelengths of the activation signal and lower than a third number of wavelengths of the activation signal.

The at least one memory may store instructions that, when executed by the at least one processor, cause the apparatus at least to: receive a resource allocation for transmitting the activation signal; and transmit the activation signal with phase rotations based on the resource allocation.

The at least one memory may store instructions that, when executed by the at least one processor, cause the apparatus at least to: determine that the apparatus does not have a static or semi-static location; and transmit the activation signal without phase rotations.

The at least one memory may store instructions that, when executed by the at least one processor, cause the apparatus at least to: determine that the apparatus has a static or semi-static location; determine that the apparatus has not received a configuration message to transmit an activation signal with phase rotations; and transmit the activation signal without phase rotations.

The at least one memory may store instructions that, when executed by the at least one processor, cause the apparatus at least to: determine that the apparatus has received a configuration message, from another apparatus configured to transmit an activation signal with phase rotations, to determine a distance from the apparatus to the other apparatus; determine the distance from the apparatus to the other apparatus; and transmit, to the other apparatus, the distance from the apparatus to the other apparatus.

The at least one memory may store instructions that, when executed by the at least one processor, cause the apparatus at least to: determine that the apparatus has received a configuration message from another apparatus configured to transmit an activation signal with phase rotations, to determine a distance from the apparatus to a reflector; determine the distance from the apparatus to the reflector; and transmit, to the other apparatus, the distance from the apparatus to the reflector.

The at least one memory may store instructions that, when executed by the at least one processor, cause the apparatus at least to: receive a resource allocation for transmitting the activation signal without rotations; and transmit the activation signal without rotations based on the resource allocation.

The activation signal may be configured to activate a passive tag.

The apparatus may be an activator.

The apparatus may be a user equipment or a fixed wireless access point.

According to an aspect there is provided an apparatus comprising means for: determining whether the apparatus has a static or semi-static location; and determining whether to transmit an activation signal with phase rotations based on whether the apparatus has a static or semi-static location.

According to an aspect there is provided an apparatus comprising circuitry configured to: determine whether the apparatus has a static or semi-static location; and determine whether to transmit an activation signal with phase rotations based on whether the apparatus has a static or semi-static location.

According to an aspect there is provided a method comprising: determine whether an apparatus has a static or semi-static location; and determine whether to transmit an activation signal with phase rotations based on whether the apparatus has a static or semi-static location

According to an aspect there is provided a computer program comprising computer executable code which when run on at least one processor is configured to: determine whether an apparatus has a static or semi-static location; and determine whether to transmit an activation signal with phase rotations based on whether the apparatus has a static or semi-static location.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AMF:: Access and Mobility Management Function
- API:: Application Programming Interface
- BS:: Base Station
- CU:: Centralized Unit
- DL:: Downlink
- DU:: Distributed Unit
- eMTC:: enhanced Machine Type Communication
- gNB:: gNodeB
- GSM:: Global System for Mobile communication
- HSS:: Home Subscriber Server
- loT:: Internet of Things
- LORA:: Long Range
- LMF:: Location Management Function
- LTE:: Long Term Evolution
- MAC:: Medium Access Control
- MS :: Mobile Station
- MTC :: Machine Type Communication
- NB:: Narrow Band
- NEF:: Network Exposure Function
- NF:: Network Function
- NR:: New radio
- NRF:: Network Repository Function
- PDU:: Packet Data Unit
- RAM:: Random Access Memory
- (R)AN:: (Radio) Access Network
- RedCap:: Reduced Capability
- RFID:: Radio Frequency Identification
- ROM:: Read Only Memory
- SCU:: Session Control Unit
- SMF:: Session Management Function
- TR:: Technical Report
- TS:: Technical Specification
- UE:: User Equipment
- UMTS:: Universal Mobile Telecommunication System
- UWB:: Ultra Wide Band
- 3GPP:: 3^{rd} Generation Partnership Project
- 5G:: 5^{th} Generation
- 5GC:: 5G Core network
- 5GS:: 5G System

### Brief Description of the Figures

Aspects will now be described, by way of example only, with reference to the accompanying Figures in which:
Figure 1 shows a schematic representation of a 5G system;
Figure 2 shows a schematic representation of a control apparatus;
Figure 3 shows a schematic representation of a user equipment;
Figure 4 shows power flows for an activator comprising a single 900 MHz dipole antenna with (a) and without (b) a reflecting surface two meters away;
Figure 5 shows an amount of attenuation in blind regions;
Figure 6 shows a first process for transmitting activation signals in a communication system;
Figure 7 shows a second process for transmitting activation signals in a communication system;
Figure 8 shows a third process for transmitting activation signals in a communication system;
Figure 9 shows power flows (10m x 5m) for two activators in free space with 1m separation and no nearby reflector;
Figure 10 shows power envelopes of activation signals from two activators using phase rotations: a) two phase rotations and b) four phase rotations;
Figure 11 shows power flows (10m x 5m) for two activators in free space with 2m separation and no nearby reflector;
Figure 12 shows power envelopes of activation signals from two activators using phase rotations: a) four phase rotations and b) eight phase rotations;
Figure 13 shows power flows (10m x 5m, top view) for two activators with 2m separation and a nearby reflector approximately 2m away (1.85m and 2.15 m);
Figure 14 shows power flows (10m x 4m, side view) for two activators with 1m separation and a nearby reflector approximately 2m away (1.85m and 2.15 m);
Figure 15 shows power envelopes of activation signals from two activators using phase rotations: a) four phase rotations and b) eight phase rotations;
Figure 16 shows power flows (top and side view) for a single activator for similar use case as in Figure 13 and Figure 14;
Figure 17 shows a block diagram of a method for transmitting an activation signal in a communication system performed by an apparatus, such as an activator;
Figure 18 shows a block diagram of a method for transmitting an activation signal in a communication system performed by an apparatus, such as a control unit;
Figure 19 shows a block diagram of a method for transmitting an activation signal in a communication system performed by an apparatus, such as an activator;
Figure 20 shows a schematic representation of a non-volatile memory medium storing instructions which when executed by a processor allow a processor to perform one or more of the steps of the methods of Figures 17 to 19.

### Detailed Description of the Figures

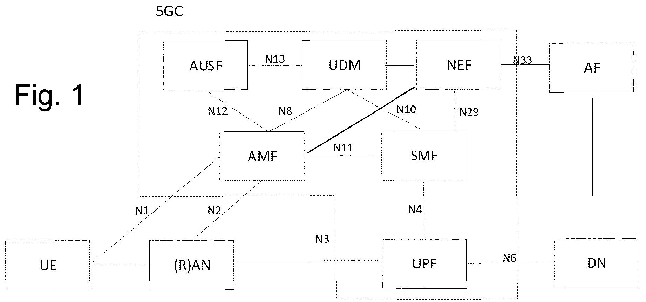

In the following certain aspects are explained with reference to mobile communication devices capable of communication via a wireless cellular system and mobile communication systems serving such mobile communication devices. Before explaining in detail the exemplifying aspects, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF), a network exposure function (NEF) and/or a location management function (LMF) (non-represented).

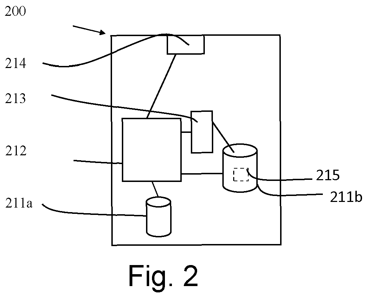

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some aspects, each function of the (R)AN or the 5GC comprises a control apparatus 200. In alternative aspects, two or more functions of the (R)AN or the 5GC may share a control apparatus.

A network element may be configured to configure a UE to transmit an activation signal with or without rotations to activate a passive tag. The network element may be referred to a a session control unit (SCU). The network element may be part of the (R)AN. For example, the network element may be a gNB. The network element may be part of the 5GC. For example, the network element may be a LMF.

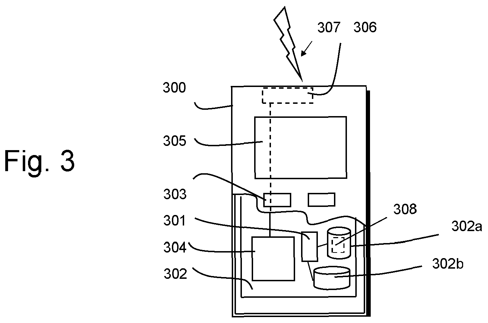

Figure 3 illustrates an example of a UE 300, such as the UE illustrated on Figure 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

The UE 300 may be configured to transmit an activation signal with or without phase rotations to activate a passive tag. The UE 300 may then be referred to as an activator.

One or more aspect of this disclosure relates to Internet of things (IoT) communications.

Prior to Release 18, 3GPP has provided specifications for narrow band Internet of things (NB-IoT), enhance machine type communication and NR reduced capability (RedCap). The specifications allow the deployments of low cost and low power IoT devices for wide area loT communication. These loT device may cost a few dollars and may consume tens or hundreds of milliwatts whilst transmitting and/or receiving communications. However, these loT devices are too expensive and consume too much power to achieve the Internet of everything. IoT devices ten or even a hundred times cheaper and consuming ten or even hundred times less power would be desirable, especially for applications requiring batteryless loT devices.

During the pre-meeting email discussion for Release 18, a common interest batteryless loT devices has arisen.

The number of loT communications has been growing rapidly in recent years and is predicted to be in the hundreds of billions by 2030. With more and more 'things' expected to be interconnected for improving production efficiency and increasing comforts of life, there has been demands further reduction of in size, cost, and power consumption for IoT devices.

Regular replacement of battery for IoT devices may be impractical due to the tremendous consumption of materials and manpower. It has been proposed to use batteryless loT devices and to use energy harvested from environments to these power batteryless loT devices. This allows for self-sustainable communications, especially in applications with a huge number of loT devices (e.g. identifier tags and sensors).

An issue with existing 3GPP technologies is the capability of using energy harvested from environments considering the limited loT device size.

IoT devices usually consume tens or even hundreds of milliwatts for transmitting and/or receiving communications. Taking NB-IoT devices for example, the typical current consumption for receiving communications is about 60mA with supply voltage is higher than 3.1V. The typical current consumption for transmitting communications is about 70mA at 0dBm transmit power. The power provided using energy harvested from environments is typically below 1 milliwatt (considering the small size of a few square centimetres for the energy harvester). Since the power using energy harvested from environments is far less than the power consumed by the loT devices, it is impractical to power IoT devices with an energy harvester in most cases.

One possible solution may be to configure the loT devices to use energy harvested from environments in combination with rechargeable battery or supercapacitor. However, there may still be a few problems to be solved. Firstly, both rechargeable battery and supercapacitor may suffer from shortened lifetime. It may be hard to provide constant charging current or voltage using energy harvesting and long continuous charging may be needed due to the very low power provided using energy harvesting. Inconstant charging current or voltage and long continuous charging may be harmful to the lifetime of the rechargeable battery or supercapacitor.

Regarding rechargeable batteries, as small size button batteries may only provide current of a few tens of milliamps, batteries with much larger size (e.g., AA battery) may be used to power loT devices. However, these batteries may be larger than the loT devices.

Regarding supercapacitors, the lifetime may be significantly reduced in high temperature environments (e.g. less than 3 years at 50 degrees centigrade). Also, the size of the loT device size may be significantly increased. To store energy for a proper duration of working (e.g. one second), the required capacitance of supercapacitors may be in the order of a hundred mill-farads. The size of such supercapacitors may be larger than the loT devices.

Also, both rechargeable batteries and supercapacitors may be more expensive than the loT devices. Even purchased in large quantities, the cost of suitable rechargeable batteries or supercapacitors may reach one or a few dollars, which nearly doubles the cost of the loT devices.

A passive tag, such as a passive radio frequency identifier (RFID) tag, is an example of a batteryless device. The power consumption of a passive RFID tags may be as low as 1 microwatt. The key techniques enabling such low power consumption may comprise envelope detection for downlink data reception and backscatter communication for uplink data transmission. A RFID tag may be designed for short-range communications, whose typical effective range is less than 10 meters. As the air interface of a RFID tag almost remained unchanged since 2005, the air interface has become the obstacle to improve its link budget and capability of supporting scalable network.

Attracted by the low power consumption of backscatter uplink data transmission, many non-3GPP technologies begin to put efforts into related research, such as Wi-Fi, Bluetooth, ultra wide band (UWB) and long range (LORA). A few microwatts or tens of microwatts power consumption may be supported for passive tags based on or with small modifications to the air interface of a RFID tag. A significant proportion of studies are targeting LORA communications. A passive LoRa tag implemented with commercial off-the-shelf components may send sensing data to a receiver 381m away. Currently, most of the studies are focusing on independent detailed techniques for various optimization targets. It is hard to see a comprehensive system design fully meeting the requirements of target use cases. However, the standardization of those technologies is agile and quick, as the industries usually follow some de facto standards. It means that many products in the market will follow even a private standard once it shows competitiveness in some applications.

RP-223396 relates to ambient loT networks and reads as follows (see section 4.1 objectives of SI).

*"This study targets at a new 3GPP IoT technology, suitable for deployment in a 3GPP system, which relies on ultra-low complexity devices with ultra-low power consumption for the very-low end IoT applications. The study shall provide clear differentiation, i.e. addressing use cases and scenarios that cannot otherwise be fulfilled based on existing 3GPP LPWA IoT technology e.g. NB-IoT including with reduced peak Tx power.*

*In terms of energy storage, the study will consider the following device characteristics:*
- *Pure batteryless devices with no energy storage capability at all, and completely dependent on the availability of an external source of energy*
- *Devices with limited energy storage capability that do not need to be replaced or recharged manually.*

*Device categorization based on corresponding characteristics (e.g. energy source, energy storage capability, passive*/*active transmission, etc.) may be discussed during the study, in relation with the relevant use cases. The device's peak power consumption shall be limited by its practical form factor for the intended use cases, and shall consider its energy source.*
- *Identify the suitable deployment scenarios and their characteristics, at least for the use cases*/*services agreed in SA1's "Study on Ambient power-enabled internet of Things ", comprising among at least the following aspects*
   - *Indoor*/*outdoor environment*
   - *Basestation characteristics, e.g. macro*/*micro*/*pico cells-based deployments*
   - *Connectivity topologies, including which node(s) , e.g. basestation, UE, relay, repeater, etc. can communicate with target devices*
   - *TDD*/*FDD, and frequency bands in licensed or unlicensed spectrum*
   - *Coexistence with UEs and infrastructure in frequency bands for existing 3GPP technologies*
   - *Device originated and*/*or device terminated traffic assumption*

   *NOTE: There can be more than one deployment scenario identified for a use case, and a deployment scenario may be common to more than one use case.*
   *NOTE: Where more than one deployment scenario is identified for a use case, the trade-offs between them should also be studied.*
   *NOTE: The study shall not prioritize deployment aspects that should be coordinated with SA, e.g. public or private network, with or without CN connection.*
   *NOTE: A representative use case can be studied for a group of use cases that have similar requirements.*
- *Formulate a set of RAN design targets based on the identified deployment scenarios and their characteristics for the relevant use cases, at least including*
   - *Power consumption*
   - *Complexity*
   - *Coverage*
   - *Data rate*
   - *Positioning accuracy*

   *NOTE: The requirements from SA1 on the relevant use cases shall be taken into consideration.*
   *NOTE: The study shall aim to provide better coverage compared to existing non-3GPP technologies for the relevant use cases.*
   *NOTE: Other RAN design targets in relation to connection density, mobility, security, latency, reliability etc. may be discussed, if necessary for the relevant use cases.*
   *NOTE: Detailed definitions of the RAN design targets should be discussed during the study.*
- *Compare and assess the feasibility of meeting the design targets for relevant use case on the basis of the deployment scenario(s) appropriate to it, and identify assumptions on required functionality to be supported.*
   *NOTE: This is not to require a detailed WG-level of analysis.*
*Note: This study shall target for an IoT segment well below the existing 3GPP IoT technologies, e.g. NB-IoT, eMTC, RedCap, etc. The study shall not aim to replace existing 3GPP LPWA technologies".*

A fixed wireless access (FWA) point or NR UE may be configured by a SCU to act as an activator in an ambient loT network to activate nearby passive tags. Let's assume that the activator operates at 900 MHz with an antenna having dipole like characteristics with approximately 3dBi antenna gain. The maximum power delivered to the antenna may be 23dBm and the implementation (i.e. absorption) loss of the antenna may be 4dB. This may result in a maximum equivalent isotropic radiated power of around 22 dBm.

A passive tag may need a minimum of 1 µW (i.e. -30 dBm) for activating, which means that the NR UE, as described above, should in theory be capable of activating the passive tag within a distance of up to 10m (based on Friis transmission equation).

However, an activation signal transmitted from a single activator in an environment with reflecting surfaces, like a warehouse or harbor area, may result in blind regions where the intended and reflected signals will cancel out each other. Passive tags located in these blind regions may not be detected.

This may especially be an issue if both the activator and the passive tags are static, like for example in a warehouse using a static or a semi-static activator.

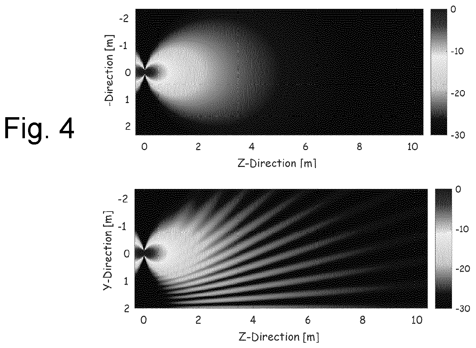

**Error! Reference source not found.**4 shows power flow for an activator comprising a single 900 MHz dipole antenna for an environment extending 10 m in a vertical direction and ± 2 m in a horizontal direction without and with a reflecting surface 2m away. The reflecting surface may be normal to the Y-axis. Figure 4(a) depicts depict the spatial power distribution without the reflecting surface. Figure 4(b) depicts depict the spatial power distribution with the reflecting surface. As can be seen the activation signal is attenuated up to the point of complete cancellation (dark grey areas radial regions which represent blind regions with signal levels below -30 dBm).

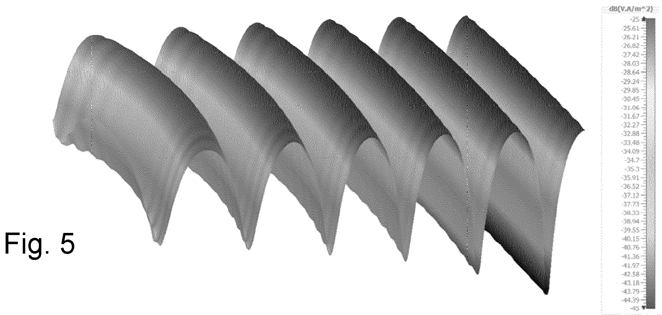

Figure 5 shows an amount of attenuation in the blind regions. The attenuation may be as high as 20dB (i.e. from -25 dBm to -45 dBm) reducing the coverage to below 1m for these blind regions. These results may be obtained with a perfect reflecting surface, which rarely is the situation in real life where most surfaces have a reflection coefficient less than 1. However blind regions with an attenuation of more than 10 dB loss are common, so this remains a valid problem for static and semi-static environments.

Semi-static environments are defined for activators that can be moved from location to location, but remain static for longer time intervals, like a portable NR UE that can be manually placed and replaced at different locations or a portable NR UE moving at slow speed (for example on a robot), where the channel coherence time is longer than the time used for a passive tag activation burst.

The reflecting surface may create standing waves in the power flow, which will result in several blind regions. This problem may in most use cases be treated as a near-field problem as the reflecting surface may be considered infinite in size and thereby may have more effect in the near-field region of the activator. The far-field region for a stand-alone activator in free space may be in the order of 0.75 m for an activator size of 0.33 m (1 wavelength), which is relatively close to the activator. However, if a reflecting surface or a second activator is 1 m or 2 m away, then the transmitted activation signal can be considered to be planar (in the far-field) after approximately 6 m or 24 m, respectively. This is the reason why Figure 4 shows power flow instead of far-field radiation patterns.

One or more aspect of this disclosure provides a mechanism to reduce or eliminate the blind regions of an activation signal and increase the coverage range of an activation signal by configuring an activator to transmit the activation signal with phase rotations (i.e. with a dynamic phase) and another activator to transmit the activation signal without phase rotations (i.e. with a static or semi-static phase) simultaneously. This may increase the likelihood of a passive tag to be activated by the activation signal in deployments where the activator and the other activator have static or semi-static locations.

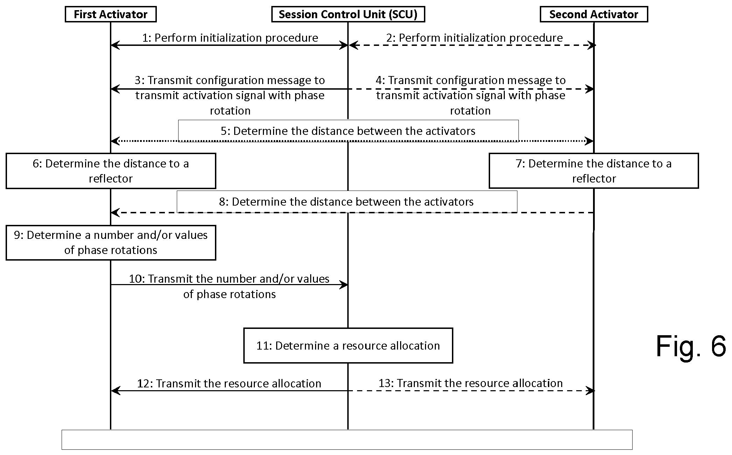

Figure 6 shows a first process for transmitting activation signals in a communication system.

In step 1, a SCU and a first activator may perform an initialization procedure. As part of the initialization procedure, the first activator may or may not transmit, to the SCU, location information indicating that the first activator has a static or semi-static location. As part of the initialization procedure, the first activator may or may not transmit, to the SCU, capability information indicating that the first activator has capability for transmitting the activation signal with phase rotations. The location information may be comprised in an information element (e.g. one bit). The capability information may be comprised in another information element (e.g. one bit).

In step 2, the SCU and a second activator may perform an initialization procedure. As part of the initialization procedure, the second activator may or may not transmit, to the SCU, location information indicating that the second activator has a static or semi-static location. As part of the initialization procedure, the second activator may or may not transmit, to the SCU, capability information indicating that the second activator has capability for transmitting the activation signal with phase rotations. The location information may be comprised in an information element (e.g. one bit). The capability information may be comprised in another information element (e.g. one bit)

The SCU may select one of the first activator and the second activator to transmit an activation signal with phase rotations and another one of the first activator and the second activator to transmit the activation signal without phase rotations. For example, the SCU may select the first activator to transmit the activation signal with phase rotations and the second activator to transmit the activation signal without phase rotations.

In step 3, the SCU may transmit a configuration message to the first activator to transmit the activation signal with phase rotations. The SCU may transmit identification information indicating an identifier of the second apparatus configured to transmit the activation signal without phase rotations. The configuration message may comprise an information element (e.g. one bit) indicating to transmit the activation signal with phase rotations. The configuration message may comprise an information element (e.g. several bits) indicating an identifier of the second apparatus configured to transmit the activation signal without phase rotations. The identifier of the second apparatus may comprise an international mobile equipment identity number, a temporary identifier assigned by the SCU or a sidelink identifier.

In step 4, the SCU may transmit a configuration message to the second activator to transmit the activation signal without phase rotations. The SCU may transmit identification information indicating an identifier of the first apparatus configured to transmit the activation signal with phase rotations. The SCU may transmit identification information indicating an identifier of the first apparatus configured to transmit the activation signal with phase rotations if both the capability information from the first activator and the capability information from the second activator indicated that the first activator and the second activator has capability for transmitting the activation signal with phase rotations.

In step 5, the first activator and/or the second activator may determine a distance between the first activator and the second activator. The distance between the first activator and the second activator may be hardcoded in the first activator and the second activator when the first activator and the second activator have static or semi-static locations. The distance between the first activator and the second activator may be determined based on a time required for transmitting a signal from the first activator to the second activator and back (e.g. return trip time).

In step 6, the first activator may determine a distance between the first activator and a reflector. The first activator may determine the distance between the first activator and a reflector using legacy radar techniques. The distance between the first activator and the reflector may be determined based on a time required for transmitting a signal from the first activator to the reflector and back (e.g. return trip time). The time may indicate the distance between the first activator and the reflector. The power loss may indicate the size and/or reflection coefficient of the reflector. A threshold level could for example be maximum 6 dB lower than the estimated free space path loss based on the distance to the object. If the level of a reflected signal is low, for example more than 6 dB lower than the transmitted signal, then that will reduce the severity of the standing waves and the areas of blind regions. As such, even if a reflector is near the activator, but with a low reflection coefficient, it will not create powerful standing waves and can be ignored.

The longer the distance between the first activator and a reflector may be determined, the higher the number of phase rotations may be determined needed to reduce or avoid blind regions, providing that the reflected power level from said reflector is above said threshold level.

In step 7, the second activator may determine a distance between the second activator and a reflector. The second activator may determine the distance between the second activator and a reflector using legacy radar techniques. The distance between the second activator and the reflector may be determined based on a time required for transmitting a signal from the second activator to the reflector and back (e.g. return trip time). The time may indicate the distance between the second activator and the reflector. The power loss may indicate the size and/or reflection coefficient of the reflector. The longer the distance between the second activator and a reflector may be determined, the higher the number of phase rotations may be needed to reduce or avoid blind regions, providing that the reflected power level from said reflector is above said threshold level.

In step 8, the second activator may transmit, to the first activator, the distance between the second activator and a reflector. The second activator may transmit, to the first activator, the distance between the second activator and a reflector using sidelink communications.

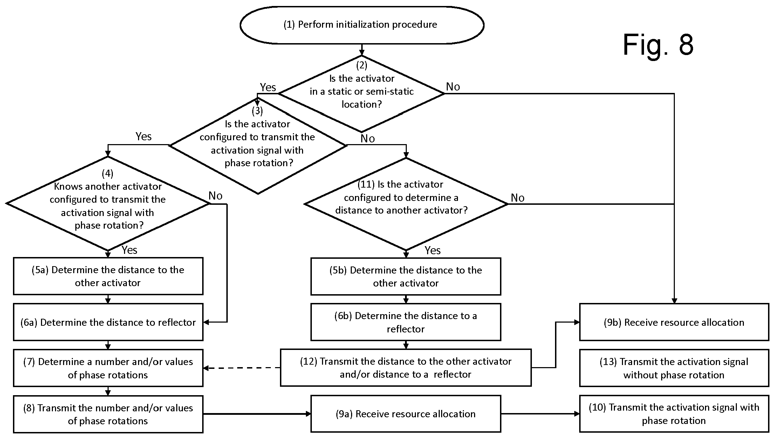

In step 9, the first activator may determine a number and/or values of phase rotations. The first activator may determine a number and/or values of phase rotations based on at least one of a wavelength of the activation signal, the distance between the first activator and the second activator, the distance between the first activator and a reflector or the distance between the second activator and a reflector. The number and/or values of phase rotations may be determined to reduce or eliminate blind regions. More details are provided in the description in reference to Figure 8.

In step 10, the first activator may transmit, to the SCU, the number and/or values of phase rotations. The first activator may transmit a configuration message comprising an information element (e.g. several bits) indicating the values of phase rotations (e.g. 15 degrees, 30 degrees, 45 degrees, 60 degrees, 90 degrees, 180 degrees) and another information element indicating the number of the phase rotations (e.g. 2, 3, 4, 5, 6, 7 or 8). When the values of phase rotations are separated by a same step value (e.g. 45 degrees), the information element indicating the values of phase rotations may indicate the step value. In step 11, the SCU may determine a resource allocation (e.g. physical resource blocks or time slots) for transmitting the activation signal based on the number and/or values of phase rotations.

In step 12, the SCU may transmit, to the first activator, the resource allocation (e.g. physical resource blocks or time slots) for transmitting the activation signal with phase rotations.

In step 13, the SCU may transmit, to the second activator, the resource allocation (e.g. physical resource blocks or time slots) for transmitting the activation signal without phase rotations.

The first activator may transmit the activation signal with phase rotations based on the resource allocation and the number and/or values of phase rotations. Simultaneously, the second activator may transmit the activation signal without phase rotations based on the resource allocation.

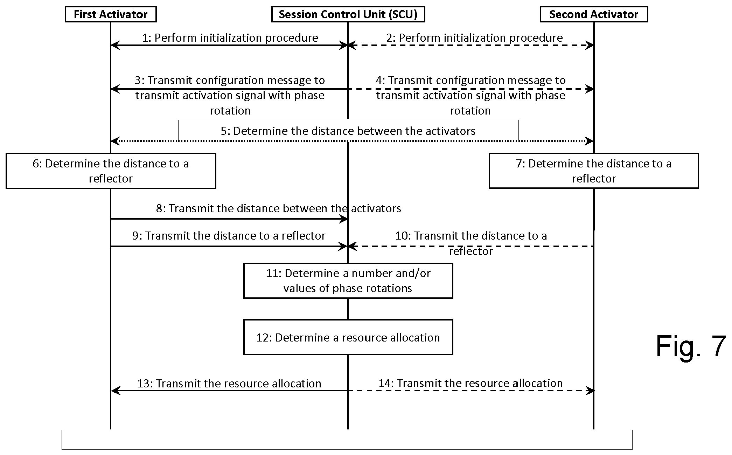

Figure 7 shows a second process for transmitting activation signals in a communication system.

In step 1, a SCU and a first activator may perform an initialization procedure. The first activator may or may not transmit, to the SCU, location information indicating that the first activator has a static or semi-static location. The first activator may or may not transmit, to the SCU, capability information indicating that the first activator has capability for transmitting the activation signal with phase rotations. The location information may be comprised in an information element (e.g. one bit). The capability information may be comprised in another information element (e.g. one bit).

In step 2, the SCU and a second activator may perform an initialization procedure. As part of the initialization procedure, the second activator may or may not transmit, to the SCU, location information indicating that the second activator has a static or semi-static location. As part of the initialization procedure, the second activator may or may not transmit, to the SCU, capability information indicating that the second activator has capability for transmitting the activation signal with phase rotations. The location information may be comprised in a second information element (e.g. one bit). The capability information may be comprised in another information element (e.g. one bit).

The SCU may select one of the first activator and the second activator to transmit an activation signal with phase rotations and another one of the first activator and the second activator to transmit the activation signal without phase rotations. For example, the SCU may select the first activator to transmit the activation signal with phase rotations and the second activator to transmit the activation signal without phase rotations.

In step 3, the SCU may transmit a configuration message to the first activator to transmit the activation signal with phase rotations. The SCU may transmit identification information indicating an identifier of the second apparatus configured to transmit the activation signal without phase rotations. The configuration message may comprise an information element (e.g. one bit) indicating to transmit the activation signal with phase rotations. The configuration message may comprise an information element (e.g. several bits) indicating an identifier of the second apparatus configured to transmit the activation signal without phase rotations. The identifier of the second apparatus may comprise an international mobile equipment identity number, a temporary identifier assigned by the SCU or a sidelink identifier.

In step 4, the SCU may transmit a configuration message to the second activator to transmit the activation signal without phase rotations. The SCU may transmit identification information indicating an identifier of the first apparatus configured to transmit the activation signal with phase rotations. The SCU may transmit identification information indicating an identifier of the first apparatus configured to transmit the activation signal with phase rotations if both the capability information from the first activator and the capability information from the second activator indicated that the first activator and the second activator has capability for transmitting the activation signal with phase rotations.

In step 5, the first activator and/or the second activator may determine a distance between the first activator and the second activator. The distance between the first activator and the second activator may be hardcoded in the first activator and the second activator when the first activator and the second activator have static or semi-static locations. The distance between the first activator and the second activator may be determined based on a time required for transmitting a signal from the first activator to the second and back (e.g. return trip time).

In step 6, the first activator may determine a distance between the first activator and a reflector. The first activator may determine the distance between the first activator and a reflector using legacy radar techniques. The distance between the first activator and the reflector may be determined based on a time required for transmitting a signal from the first activator to the reflector and back (e.g. return trip time). The time may indicate the distance between the first activator and the reflector. The power loss may indicate the size and/or reflection coefficient of the reflector. A threshold level could for example be maximum 6 dB lower than the estimated free space path loss based on the distance to the object. The longer the distance between the first activator and a reflector may be determined, the higher the number of phase rotations may be needed to reduce or avoid bling regions, providing that the reflected power level from said reflector is above said threshold level.

In step 7, the second activator may determine a distance between the second activator and a reflector. The second activator may determine the distance between the second activator and a reflector using legacy radar techniques. The distance between the second activator and the reflector may be determined based on a time required for transmitting a signal from the second activator to the reflector and back (e.g. return trip time). The time may indicate the distance between the second activator and the reflector. The power loss may indicate the size and/or reflection coefficient of the reflector. The longer the distance between the second activator and a reflector may be determined, the higher the number of phase rotations may be needed to reduce or avoid blind regions, providing that the reflected power level from said reflector is above said threshold level.

In step 8, the first activator may transmit, to the SCU, the distance between the first activator and the second activator. Alternatively, the second activator may transmit, to the SCU, the distance between the first activator and the second activator.

In step 9, the first activator may transmit, to the SCU, the distance between the first activator and a reflector.

In step 10, the second activator may transmit, to the SCU, the distance between the second activator and a reflector.

In step 11, the SCU may determine a number and/or values of phase rotations. The SCU activator may determine a number and/or values of phase rotations based on at least one of a wavelength of the activation signal, the distance between the first activator and the second activator, the distance between the first activator and a reflector or the distance between the second activator and a reflector. The number and/or values of phase rotations may be determined to reduce or eliminate blind regions.

In step 12, the SCU may determine a resource allocation (e.g. physical resource blocks or time slots) for transmitting the activation signal based on the number and/or values of phase rotations.

In step 13, the SCU may transmit, to the first activator, the number and/or phase rotations The first activator may transmit a configuration message comprising an information element (e.g. several bits) indicating the values of phase rotations (e.g. 15 degrees, 30 degrees, 45 degrees, 60 degrees, 90 degrees, 180 degrees) and another information element indicating the number of the phase rotations (e.g. 2, 3, 4, 5, 6, 7 or 8). When the values of phase rotations are separated by a same step value (e.g. 45 degrees), the information element indicating the values of phase rotations may indicate the step value

The SCU may transmit, to the first activator, the resource allocation (e.g. physical resource blocks or time slots) for transmitting the activation signal with phase rotations.

In step 14, the SCU may transmit, to the second activator, the resource allocation (e.g. physical resource blocks or time slots) for transmitting the activation signal without phase rotations.

The first activator may transmit the activation signal with phase rotations based on the resource allocation and the number and/or values of phase rotations. Simultaneously, the second activator may transmit the activation signal without phase rotations based on the resource allocation.

Figure 8 shows a third process for transmitting activation signals in a communication system.

In step 1, an activator and a SCU may perform an initialization procedure. The activator may or may not transmit, to the SCU, location information indicating that the activator has a static or semi-static location. The activator may or may not transmit, to the SCU, capability information indicating that the activator has capability for transmitting the activation signal with phase rotations. The location information and the capability information may be comprised in an information element. The process may go to step 1.

In step 2, the activator may determine whether the activator has a static or semi-static location. If the activator has a static or semi-static location the process may go to step 3. If the activator does not have a static or semi-static location the process may go to step 9.

In step 3, the activator may determine whether the activator has been configured to transmit an activation signal with phase rotations. For example, the activator may determine whether the activator has received a configuration message from the SCU to transmit the activation signal with phase rotations. If the activator has been configured to transmit the activation signal with phase rotations, the process may go to step 4. If the activator has not been configured to transmit the activation signal with phase rotations, the process may go to step 11.

In step 4, the activator may determine whether the activator knows another apparatus configured to transmit the activation signal without phase rotations. For example, the activator may determine whether the activator has received identification information from the SCU indicating the identifier of another apparatus configured to transmit the activation signal without phase rotations. If the activator knows another apparatus configured to transmit the activation signal without phase rotations, the process may go to step 5a. If the activator does not know another apparatus configured to transmit the activation signal without phase rotations, the process may go to step 6a.

In step 5a, the activator may determine a distance between the activator and the other activator. The distance between the activator and the other activator may be hardcoded in the activator and the other activator when the activator and the other activator have static or semi-static locations. The distance between the activator and the other activator may be determined based on a time required for transmitting a signal from the activator to the other activator and back (e.g. return trip time). The process may go to step 6a. Alternatively, the activator may receive the distance between the activator and the other activator in step 1, in which case step 5a may be skipped.

In step 6a, the activator may determine a distance between the activator and a reflector. The activator may determine the distance between the activator and a reflector using legacy radar techniques. The distance between the activator and the reflector may be determined based on a time required for transmitting a signal from the activator to the reflector and back (e.g. return trip time). The time may indicate the distance between the activator and the reflector. The power loss may indicate the size and/or reflection coefficient of the reflector. The longer the distance between the activator and a reflector may be determined, the higher the number of phase rotations may be needed to reduce or avoid bling regions, providing that the reflected power level from said reflector is above said threshold level. The process may go to step 7.

In step 7, the activator may determine a number and/or values of phase rotations based on at least one of a wavelength of the activation signal, the distance between the activator and the other activator, the distance between the activator and an object and a distance between the other activator and an object. For example, the number of phase rotations may be calculated as follows.

*If Disₘₐₓ < 3* * *λ → Number of phase rotations may be 4.*

*If 3 * λ < Disₘₐₓ < 6 * λ → Number* of *phase rotations may be 8.*

*If 6 * λ < Disₘₐₓ < 12 * λ → Number of phase rotations may be 16.*

*If ... etc...*

*Disₘₐₓ* may be the maximum distance between the distance between the activator and the other activator, the distance between the activator and a reflector and/or the distance between the other activator and a reflector.

*λ* may be the wavelength of the activation signal.

Other number of phase rotations and/or different interval sizes may of course be chosen. The process may go to step 8.

In step 8, the activator may transmit, to the SCU, the number and/or values of phase rotations. The process may go to step 9a.

In step 9a, the activator may wait to receive, from the SCU, a resource allocation to transmit the activation signal. The activator may receive, from the SCU, a resource allocation to transmit the activation signal. The process may go to step 10.

In step 10, the activator may transmit the activation signal with phase rotations based on the resource allocation and the number and/or values of phase rotations.

In step 11, the activator may determine whether the activator has received, from the SCU or another activator configured to transmit an activation signal with phase rotations, a configuration message to determine a distance between the activator and the other activator. If the activator determines the activator has received a configuration message to determine a distance between the activator and the other activator, the process may go to step 5b. If the activator determines the activator has not received a configuration message to determine a distance between the activator and the other activator, the process may go to step 9b.

In step 5b, the activator may determine a distance between the activator and the other activator. The distance between the activator and the other activator may be hardcoded in the activator and the other activator when the activator and the other activator have static or semi-static locations. The distance between the activator and the other activator may be determined based on a time required for transmitting a signal from the activator to the other activator and back (e.g. return trip time). The process may go to step 6b.

In step 6b, the activator may determine a distance between the activator and a reflector. The activator may determine the distance between the activator and a reflector using legacy radar techniques. The distance between the activator and the reflector may be determined based on a time required for transmitting a signal from the activator to the reflector and back (e.g. return trip time). The time may indicate the distance between the activator and the reflector. The power loss may indicate the size and/or reflection coefficient of the reflector. The longer the distance between the activator and a reflector may be determined, the higher the number of phase rotations may be needed to reduce or avoid bling regions. The process may go to step 12.

In step 12, the activator may transmit, to the other activator, the distance between the activator and the other activator. The activator may transmit, to the other activator, the distance between the activator and a reflector. The process may go to step 9b.

In step 9b, the activator may wait to receive, from the SCU, a resource allocation to transmit the activation signal. The activator may receive, from the SCU, a resource allocation to transmit the activation signal. The process may go to step 13.

In step 13, the activator may transmit the activation signal without phase rotations based on the resource allocation and the number and/or values of phase rotations.

In the following various examples are provided to illustrate the problems of blind regions and coverage range of an activation signal and how these problems may be solved by coordinating the transmission of the activation signal by two activators.

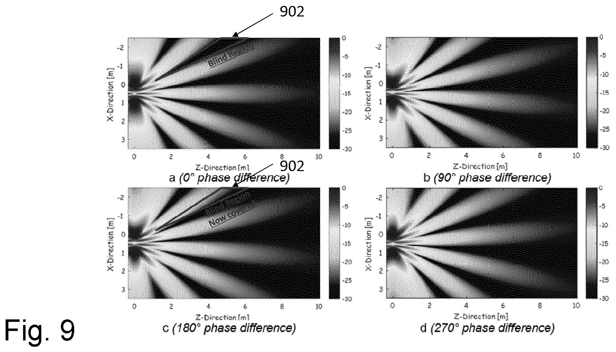

Figure 9 shows power flows (10m x 5m) for two activators in free space with 1m separation and no nearby reflector. Each activator may comprise a dipole antenna. The two activators may be configured to transmit an activation signal simultaneously with different phase differences (e.g. 0 degree, 90 degrees, 180 degrees and 270 degrees). The different phase differences may be obtained by configuring an activator to transmit the activation signal with phase rotations and configuring another activator to transmit the activation signal without phase rotations. As can be seen, when the phase difference is 0 degree a blind region 902 may appear whereas when the phase difference is 180 degrees the blind region 902 may disappear.

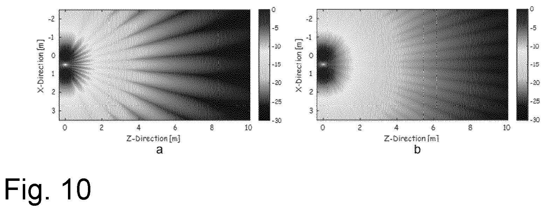

Figure 10 shows power envelopes of activation signals from two activators using phase rotations: a) two phase rotations and b) four phase rotations. As can be seen a minimum of two phase differences (e.g. 0 degree and 180 degrees), and therefore a minimum of two phase rotations, may be needed to reduce or avoid blind regions. However, additional phase differences (e.g. 90 degrees and 270 degrees), and therefore additional phase rotations may improve the coverage range of the activation signal.

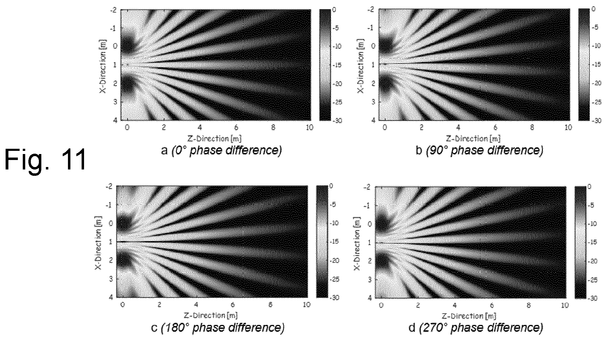

Figure 11 shows power flows (10m x 5m) for two activators in free space with 2m separation and no nearby reflector. Each activator may comprise a dipole antenna. The two activators may be configured to transmit an activation signal simultaneously with different phase differences (e.g. 0 degree, 90 degrees, 180 degrees and 270 degrees). The different phase differences may be obtained by configuring an activator to transmit the activation signal with phase rotations and configuring another activator to transmit the activation signal without phase rotations.

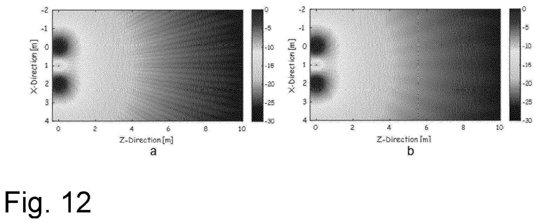

Figure 12 shows power envelopes of activation signals from two activators using phase rotations: a) four phase rotations and b) eight phase rotations. As can be seen a minimum of four phase differences (e.g. 0 degree, 90 degrees, 180 degrees and 270 degrees), and therefore a minimum of four phase rotations, may be needed to reduce or avoid blind regions. However, additional phase differences (e.g. 45 degrees, 135 degrees, 225 degrees and 315 degrees), and therefore additional phase rotations may improve the coverage range of the activation signal.

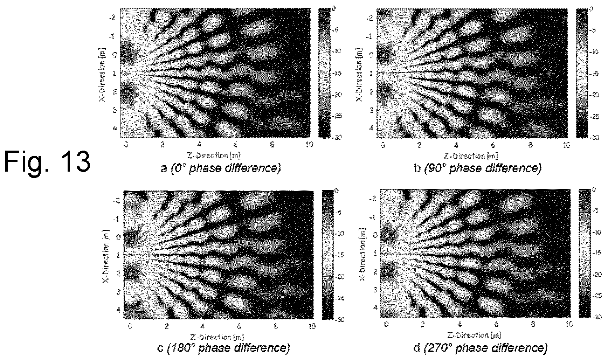

Figure 13 shows power flows (10m x 5m, top view) for two activators with 2m separation and a nearby reflector approximately 2m away (1.85m and 2.15 m). The nearby reflector may be normal to the Y-axis. An offset between the distances of the two activators to the reflector has been chosen in this example. It may mimic reality more thantwo activators with exactly the same distance from the nearby reflector. Each activator may comprise a dipole antenna. The two activators may be configured to transmit an activation signal simultaneously with different phase differences (e.g. 0 degree, 90 degrees, 180 degrees and 270 degrees). The different phase differences may be obtained by configuring an activator to transmit the activation signal with phase rotations and configuring another activator to transmit the activation signal without phase rotations.

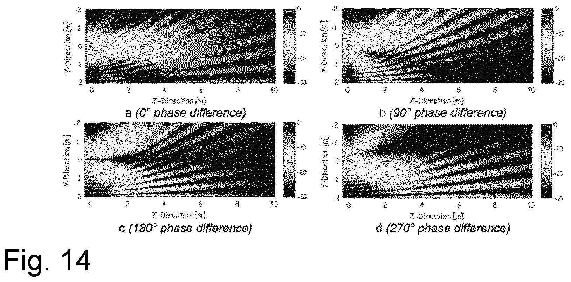

Figure 14 shows power flows (10m x 4m, side view) for two activators with 1m separation and a nearby reflector normal to the Y-axis and approximately 2m away (1.85m and 2.15 m). As can be seen a minimum of four phase differences (e.g. 0 degree, 90 degrees, 180 degrees and 270 degrees), and therefore a minimum of four phase rotations, may be needed to reduce or avoid blind regions. However, additional phase differences (e.g. 45 degrees, 135 degrees, 225 degrees and 315 degrees), and therefore additional phase rotations may improve the coverage range of the activation signal.

As can further be seen, the improvement in the coverage range of the activation signal may be lower than in the example of Figure 11 and 12 (i.e. no nearby reflector) because in the example the dipole antennas of the activators are parallel to each other and are orthogonal to the nearby reflector. This orientation of the dipole antennas has been chosen due to simulation technicalities and such exact symmetry may almost never be obtained in real-life.

It will be understood that the meshing of the simulator may be done with cubes. So, modelling the dipoles in parallel or orthogonal orientation may reduce the simulation complexity and thereby hardware requirements. As such, the two simulated dipoles may be parallel to each other and orthogonal to the reflector. That is the symmetry we are refereeing to.

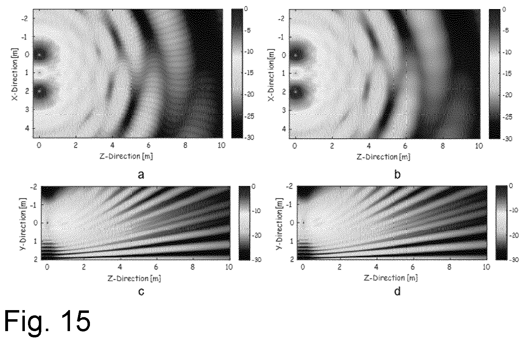

Figure 15 shows power envelopes of activation signals from two activators using phase rotations: a) four phase rotations and b) eight phase rotations.

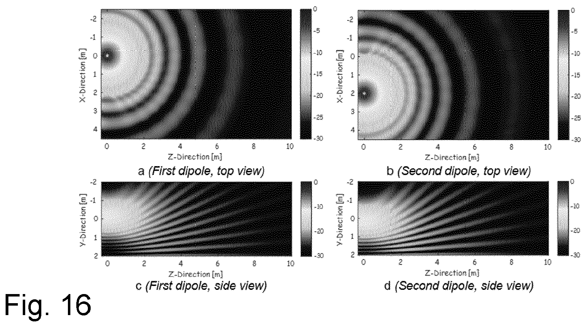

Figure 16 shows power flows (top and side view) for a single activator for similar use case as in Figure 13 and Figure 14.

As can further be seen, more blind regions may appear in the example of Figure 14 and in the example of Figure 15, where a nearby reflector is present, compared to the example of Figure 9 and Figure 11, where no nearby reflector is present, even if phase rotations is utilized. In the example of Figure 14 and Figure 15 and the example of Figure 9 and Figure 11, where two activators transmit the activation signal simultaneously, the coverage range of the activation signal may be increased compared to the example of Figure 16 where one activator transmits the activation signal.

It's clear to see from the above that an increase in distance between the two activators and/or an increase in distance between the two activators and a nearby reflector may increase the number of phase rotations needed to reduce or eliminate blind regions. The number of phase rotations may be based on the maximum distance between the distance between the two activators, the distance from one of the two activator and a reflector and/or the distance from the other one of the two activators and a reflector. The angular direction of the two activators and/or the reflector may not be important for the number of needed phase rotations, but it may affect the interference pattern.

It will be understood that although in the above examples two activators are used, more than two activators may be used to transmit the activation signal simultaneously with at least one activator transmitting the activation signal with phase rotations and at least one activator transmitting the activation signal without phase rotations. When more than one activator transmits the activation signal with phase rotations, these more than one activator transmits the activation signal with same phase rotations or with different phase rotations.

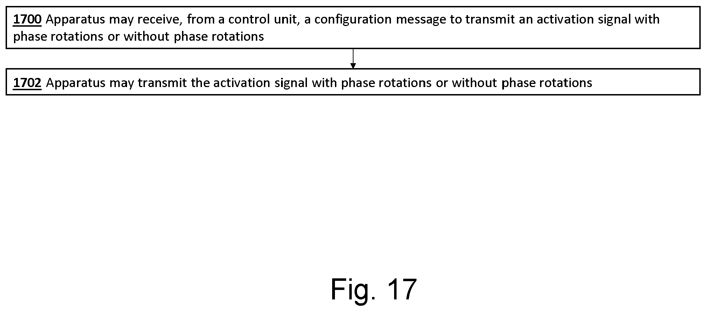

Figure 17 shows a block diagram of a method for transmitting an activation signal in a communication system performed by an apparatus, such as an activator (e.g. UE).

In step 1702, the apparatus may receive, from a control unit, a configuration message to transmit an activation signal with phase rotations or without phase rotations.

In step 1704, the apparatus may transmit the activation signal with phase rotations or without phase rotations.

The apparatus may transmit, to the control unit, location information indicating that the apparatus has a static or semi-static location.

The apparatus may transmit, to the control unit, capability information indicating that the apparatus has capability for transmitting the activation signal with phase rotations.

The apparatus may receive, from a control unit, identification information indicating an identifier of another apparatus configured to transmit the activation signal without phase rotations.

The apparatus may receive, from the other apparatus, a distance from the apparatus to the other apparatus.

The apparatus may determine a distance from the apparatus to the other apparatus.

The apparatus may transmit, to the control unit, the distance from the apparatus to the other apparatus.

The apparatus may determine a number and/or values of phase rotations based on the distance from the apparatus to the other apparatus.

The apparatus may receive, from the other apparatus, a distance from the apparatus to a reflector.

The apparatus may determine a distance from the apparatus to a reflector.

The apparatus may transmit, to the control unit, the distance from the apparatus to the reflector.

The apparatus may determine a number and/or values of phase rotations based on the distance from the apparatus to the reflector.

The apparatus may transmit, to the control unit the number of phase rotations.

The apparatus may receive, from the control unit, a resource allocation to transmit the activation signal. The apparatus may transmit the activation signal with phase rotations based on the resource allocation.

The activation signal may be configured to activate a passive tag.

The apparatus may be a user equipment or a fixed wireless access point.

The apparatus may comprise a dipole antenna configured to transmit the activation signal.

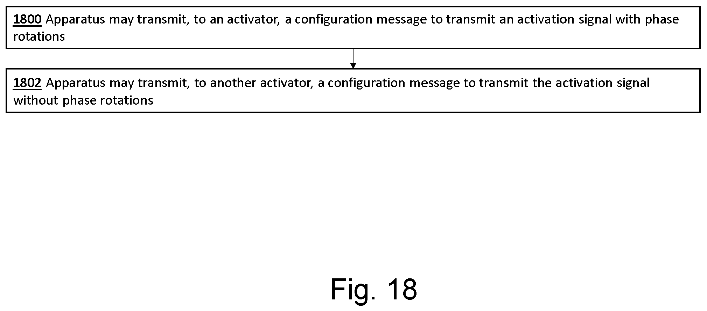

Figure 18 shows a block diagram of a method for transmitting an activation signal in a communication system performed by an apparatus, such as a control unit (e.g. SCU).

In step 1802, the apparatus may transmit, to an activator, a configuration message to transmit an activation signal with phase rotations.

In step 1804, the apparatus may transmit, to another activator, a configuration message to transmit the activation signal without phase rotations.

The apparatus may receive, from the activator, location information indicating that the activator has a static or semi-static location. The apparatus may select the activator to transmit the activation signal with phase rotations.

The apparatus may receive, from the activator, capability information indicating that the activator has capability for transmitting the activation signal with phase rotations. The apparatus may select the activator to transmit the activation signal with phase rotations.

The apparatus may receive, from the other activator, location information indicating that the other activator has a static or semi-static location or does not have a static or semi-static location. The apparatus may select the other activator to transmit the activation signal without phase rotations.

The apparatus may receive, from the other activator, capability information indicating that the other activator has capability for transmitting the activation signal with phase rotations or does not have capability for transmitting the activation signal with phase rotations. The apparatus may select the other activator to transmit the activation signal without phase rotations.

The apparatus may transmit, to the activator, identification information indicating an identifier of the other activator.

The apparatus receive, from the activator, the distance from the activator to the other activator. The apparatus may determine a number and/or values of phase rotations based on the distance from the activator to the other activator.

The apparatus may receive, from the activator, a distance from the activator to a reflector. The apparatus may determine a number and/or values of phase rotations based on the distance from the activator to the reflector.

The apparatus may receive, from the activator, a number and/or values of phase rotations.

The apparatus may determine a resource allocation to transmit the activation signal based on the number of phase rotations. The apparatus may transmit, to the activator, the resource allocation.

The apparatus may transmit, to the other activator, the resource allocation.

The apparatus may be part of an access network or a core network.

The apparatus may be part of a base station or a location management function.

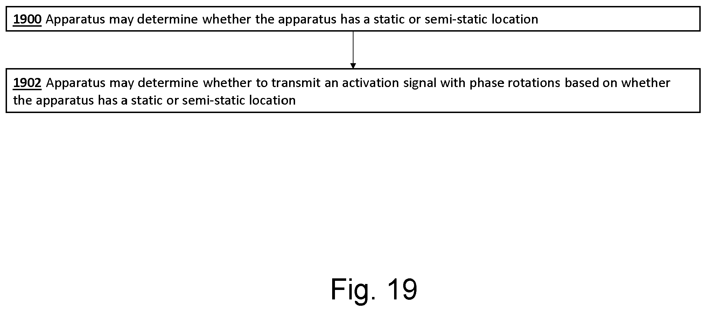

Figure 19 shows a block diagram of a method for transmitting an activation signal in a communication system performed by an apparatus, such as a activator (e.g. UE).

In step 1900, the apparatus may determine whether the apparatus has a static or semi-static location.

In step 1902, the apparatus may determine whether to transmit an activation signal with phase rotations based on whether the apparatus has a static or semi-static location.

The apparatus may determine whether the apparatus has received a configuration message to transmit the activation signal with phase rotations. The apparatus may determine whether to transmit the activation signal with phase rotations based on whether the apparatus has received the configuration message to transmit the activation signal with phase rotations.

The apparatus may determine that the apparatus has a static or semi-static location; determine that the apparatus has received the configuration message to transmit the activation signal with phase rotations; and transmit the activation signal with phase rotations.

The apparatus may determine a number and/or values of phase rotations; and transmit the activation signal with phase rotation based on the number and/or values of phase rotations.

The apparatus may determine a wavelength of the activation signal; and determine the number and/or values of phase rotations based on the wavelength of the activation signal.

The apparatus may determine a distance from the apparatus to another apparatus configured to transmit the activation signal without phase rotations. The apparatus may determine the number and/or values of phase rotations based on the distance from the apparatus to the other apparatus.

The apparatus may receive a distance from the apparatus to another apparatus configured to transmit the activation signal without phase rotations determined by the other apparatus. The apparatus may determine the number and/or values of phase rotations based on the distance from the apparatus to the other apparatus.

The apparatus may determine a distance from the apparatus to a reflector. The apparatus may determine the number and/or values of phase rotations based on the distance from the apparatus to the reflector.

The apparatus may receive a distance from the other apparatus to a reflector determined by another apparatus configured to transmit the activation signal without phase rotations. The apparatus may determine the number and/or values of phase rotations based on the distance from the other apparatus to the reflector.

The apparatus may determine a maximum distance between the distance from the apparatus to the other apparatus, the distance from the apparatus to the reflector and/or the distance from the other apparatus and the reflector. The apparatus may determine the number and/or values of phase rotations based on the maximum distance.

The apparatus may determine a first number and/or first values of phase rotations when the maximum distance is lower than a first number of wavelengths of the activation signal. The apparatus may determine a second number and/or second values of phase rotations when the maximum distance is greater than the first number wavelengths of the activation signal and lower than a second number of wavelengths of the activation signal. The apparatus may determine a third number and/or third values of phase rotations when the maximum distance is greater than the second number of wavelengths of the activation signal and lower than a third number of wavelengths of the activation signal.

The apparatus may receive a resource allocation for transmitting the activation signal. The apparatus may transmit the activation signal with phase rotations based on the resource allocation.

The apparatus may determine that the apparatus does not have a static or semi-static location. The apparatus may transmit the activation signal without phase rotations.

The apparatus may determine that the apparatus has a static or semi-static location;
determine that the apparatus has not received a configuration message to transmit an activation signal with phase rotations. The apparatus may transmit the activation signal without phase rotations.

The apparatus may determine that the apparatus has received a configuration message, from another apparatus configured to transmit an activation signal with phase rotations, to determine a distance from the apparatus to the other apparatus. The apparatus may determine the distance from the apparatus to the other apparatus. The apparatus may transmit, to the other apparatus, the distance from the apparatus to the other apparatus.

The apparatus may determine that the apparatus has received a configuration message from another apparatus configured to transmit an activation signal with phase rotations, to determine a distance from the apparatus to a reflector. The apparatus may determine the distance from the apparatus to the reflector. The apparatus may transmit, to the other apparatus, the distance from the apparatus to the reflector.

The apparatus may receive a resource allocation for transmitting the activation signal without rotations. The apparatus may transmit the activation signal without rotations based on the resource allocation.

The activation signal may be configured to activate a passive tag.

The apparatus may be a user equipment or a fixed wireless access point.

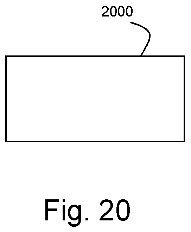

Figure 20 shows a schematic representation of non-volatile memory media 2000 storing instructions and/or parameters which when executed by a processor allow the processor to perform one or more of the steps of the methods of Figures 17 to 19.

It will be understood that although the above concepts have been discussed in the context of a 5GS, one or more of these concepts may be applied to other cellular systems.

The aspects may thus vary within the scope of the attached claims. In general, some aspects may be implemented in hardware or special purpose circuits, software, logic or any combination thereof. For example, some aspects may be implemented in hardware, while other aspects may be implemented in firmware or software which may be executed by a controller, microprocessor or other computing device, although aspects are not limited thereto. While various aspects may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The aspects may be implemented by computer software stored in a memory and executable by at least one data processor of the involved entities or by hardware, or by a combination of software and hardware. Further in this regard it should be noted that any procedures, e.g., as in Figures 17 to 19, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some aspects may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some aspects.

However, various modifications and adaptations may become apparent to those skilled in the relevant arts in view of the foregoing description, when read in conjunction with the accompanying drawings and the appended claims.

## Claims

1. An apparatus comprising:
means for determining (1900) that the apparatus has a static or semi-static location;
means for determining (1902) to transmit an activation signal with phase rotations to activate a passive tag based on the apparatus having a static or semi-static location; and
means for transmitting the activation signal with phase rotations,
wherein a number and/or values of the phase rotations are based on at least one of a wavelength of the activation signal, a distance from the apparatus to another apparatus configured to transmit the activation signal without phase rotations, a distance from the apparatus to a reflector or a distance from another apparatus configured to transmit the activation signal without phase rotations to a reflector.

2. The apparatus of claim 1, comprising:
means for determining that the apparatus has received a configuration message to transmit the activation signal with phase rotations; and
means for determining to transmit the activation signal with phase rotations based on the apparatus receiving the configuration message to transmit the activation signal with phase rotations.

3. The apparatus of claim 2, comprising:
means for determining the number and/or the values of the phase rotations; and
means for transmitting the activation signal with phase rotation based on the number and/or the values of the phase rotations.

4. The apparatus of claim 3, comprising:
means for determining the wavelength of the activation signal; and
means for determining the number and/or the values of the phase rotations based on the wavelength of the activation signal.

5. The apparatus of claim 3 or claim 4, comprising:
means for determining the distance from the apparatus to another apparatus configured to transmit the activation signal without phase rotations; and
means for determining the number and/or the values of the phase rotations based on the distance from the apparatus to the other apparatus.

6. The apparatus of claim 3 or claim 4, comprising:
means for receiving the distance from the apparatus to another apparatus configured to transmit the activation signal without phase rotations determined by the other apparatus; and
means for determining the number and/or the values of the phase rotations based on the distance from the apparatus to the other apparatus.

7. The apparatus of any of claims 3 to 6, comprising:
means for determining the distance from the apparatus to a reflector; and
means for determining the number and/or the values of the phase rotations based on the distance from the apparatus to the reflector.

8. The apparatus of any of claims 3 to 6, comprising:
means for receiving the distance from the other apparatus to a reflector determined by another apparatus configured to transmit the activation signal without phase rotations; and
means for determining the number and/or the values of the phase rotations based on the distance from the other apparatus to the reflector.

9. The apparatus of any claims 5 to 8, comprising:
means for determining a maximum distance between the distance from the apparatus to the other apparatus, the distance from the apparatus to the reflector and/or the distance from the other apparatus and the reflector; and
means for determining the number and/or the values of the phase rotations based on the maximum distance.

10. The apparatus of claim 9, comprising:
means for determining a first number and/or first values of the phase rotations when the maximum distance is lower than a first number of wavelengths of the activation signal;
means for determining a second number and/or second values of the phase rotations when the maximum distance is greater than the first number wavelengths of the activation signal and lower than a second number of wavelengths of the activation signal; or
means for determining a third number and/or third values of the phase rotations when the maximum distance is greater than the second number of wavelengths of the activation signal and lower than a third number of wavelengths of the activation signal.

11. The apparatus of any of claims 1 to 10, comprising:
means for receiving a resource allocation for transmitting the activation signal; and
means for transmitting the activation signal with phase rotations based on the resource allocation.

12. The apparatus of any of claims 1 to 11, wherein the apparatus is an activator.

13. The apparatus of claim 12, wherein the apparatus is a user equipment or a fixed wireless access point.

14. A method performed by an apparatus, the method comprising:
determining (1900) that the apparatus has a static or semi-static location;
determining (1902) to transmit an activation signal with phase rotations to activate a passive tag based on the apparatus having a static or semi-static location; and
transmitting the activation signal with phase rotations,
wherein a number and/or values of the phase rotations are based on at least one of a wavelength of the activation signal, a distance from the apparatus to another apparatus configured to transmit the activation signal without phase rotations, a distance from the apparatus to a reflector or a distance from another apparatus configured to transmit the activation signal without phase rotations to a reflector.

15. A computer program comprising computer executable instructions which when run on one or more processors cause the one or more processors to perform the steps of the method of claim 14.

## Patentansprüche

1. Vorrichtung, die Folgendes umfasst:
Mittel zum Bestimmen (1900), dass die Vorrichtung einen statischen oder semistatischen Standort aufweist;
Mittel zum Bestimmen (1902), ein Aktivierungssignal mit Phasenrotationen zu übertragen, um darauf basierend, dass die Vorrichtung einen statischen oder semistatischen Standort aufweist, ein passives Tag zu aktivieren; und
Mittel zum Übertragen des Aktivierungssignals mit Phasenrotationen,
wobei eine Anzahl und/oder Werte der Phasenrotationen auf mindestens einem von einer Wellenlänge des Aktivierungssignals, einem Abstand von der Vorrichtung zu einer anderen Vorrichtung, die dazu ausgelegt ist, das Aktivierungssignal ohne Phasenrotationen zu übertragen, einem Abstand von der Vorrichtung zu einem Reflektor oder einem Abstand von einer anderen Vorrichtung, die dazu ausgelegt ist, das Aktivierungssignal ohne Phasenrotationen zu einem Reflektor zu übertragen, basieren.

2. Vorrichtung nach Anspruch 1, die Folgendes umfasst:
Mittel zum Bestimmen, dass die Vorrichtung eine Auslegungsnachricht zum Übertragen des Aktivierungssignals mit Phasenrotationen empfangen hat; und
Mittel zum Bestimmen, das Aktivierungssignal mit Phasenrotationen darauf basierend zu übertragen, dass die Vorrichtung die Auslegungsnachricht zum Übertragen des Aktivierungssignals mit Phasenrotationen empfangen hat.

3. Vorrichtung nach Anspruch 2, die Folgendes umfasst:
Mittel zum Bestimmen der Anzahl und/oder der Werte der Phasenrotationen und
Mittel zum Übertragen des Aktivierungssignals mit Phasenrotationen auf Basis der Anzahl und/oder der Werte der Phasenrotationen.

4. Vorrichtung nach Anspruch 3, die Folgendes umfasst:
Mittel zum Bestimmen der Wellenlänge des Aktivierungssignals und
Mittel zum Bestimmen der Anzahl und/oder der Werte der Phasenrotationen auf Basis der Wellenlänge des Aktivierungssignals.

5. Vorrichtung nach Anspruch 3 oder Anspruch 4, die Folgendes umfasst:
Mittel zum Bestimmen des Abstands von der Vorrichtung zu einer anderen Vorrichtung, die dazu ausgelegt ist, das Aktivierungssignal ohne Phasenrotationen zu übertragen; und
Mittel zum Bestimmen der Anzahl und/oder der Werte der Phasenrotationen auf Basis des Abstands von der Vorrichtung zur anderen Vorrichtung.

6. Vorrichtung nach Anspruch 3 oder Anspruch 4, die Folgendes umfasst:
Mittel zum Empfangen des Abstands von der Vorrichtung zu einer anderen Vorrichtung, die dazu ausgelegt ist, das Aktivierungssignal ohne Phasenrotationen zu übertragen, der von der anderen Vorrichtung bestimmt wurde; und
Mittel zum Bestimmen der Anzahl und/oder der Werte der Phasenrotationen auf Basis des Abstands von der Vorrichtung zur anderen Vorrichtung.

7. Vorrichtung nach einem der Ansprüche 3 bis 6, die Folgendes umfasst:
Mittel zum Bestimmen des Abstands von der Vorrichtung zu einem Reflektor und
Mittel zum Bestimmen der Anzahl und/oder der Werte der Phasenrotationen auf Basis des Abstands von der Vorrichtung zum Reflektor.

8. Vorrichtung nach einem der Ansprüche 3 bis 6, die Folgendes umfasst:
Mittel zum Empfangen des Abstands von der anderen Vorrichtung zu einem Reflektor, der von einer anderen Vorrichtung bestimmt wurde, die dazu ausgelegt ist, das Aktivierungssignal ohne Phasenrotationen zu übertragen; und
Mittel zum Bestimmen der Anzahl und/oder der Werte der Phasenrotationen auf Basis des Abstands von der anderen Vorrichtung zum Reflektor.

9. Vorrichtung nach einem der Ansprüche 5 bis 8, die Folgendes umfasst:
Mittel zum Bestimmen eines maximalen Abstands zwischen dem Abstand von der Vorrichtung zur anderen Vorrichtung, des Abstands von der Vorrichtung zum Reflektor und/oder des Abstands von der anderen Vorrichtung zum Reflektor und
Mittel zum Bestimmen der Anzahl und/oder der Werte der Phasenrotationen auf Basis des maximalen Abstands.

10. Vorrichtung nach Anspruch 9, die Folgendes umfasst:
Mittel zum Bestimmen einer ersten Anzahl und/oder von ersten Werten der Phasenrotationen, wenn der maximale Abstand kleiner ist als eine erste Anzahl von Wellenlängen des Aktivierungssignals;
Mittel zum Bestimmen einer zweiten Anzahl und/oder von zweiten Werten der Phasenrotationen, wenn der maximale Abstand größer ist als die erste Anzahl Wellenlängen des Aktivierungssignals und kleiner ist als eine zweite Anzahl von Wellenlängen des Aktivierungssignals; oder
Mittel zum Bestimmen einer dritten Anzahl und/oder von dritten Werten der Phasenrotationen, wenn der maximale Abstand größer ist als die zweite Anzahl von Wellenlängen des Aktivierungssignals und kleiner ist als eine dritte Anzahl von Wellenlängen des Aktivierungssignals.

11. Vorrichtung nach einem der Ansprüche 1 bis 10, die Folgendes umfasst:
Mittel zum Empfangen einer Ressourcenzuteilung zum Übertragen des Aktivierungssignals und
Mittel zum Übertragen des Aktivierungssignals mit Phasenrotationen auf Basis der Ressourcenzuteilung.

12. Vorrichtung nach einem der Ansprüche 1 bis 11, wobei die Vorrichtung ein Aktivator ist.

13. Vorrichtung nach Anspruch 12, wobei die Vorrichtung eine Teilnehmereinrichtung oder ein fester drahtloser Zugangspunkt ist.

14. Verfahren, das von einer Vorrichtung durchgeführt wird, wobei das Verfahren Folgendes umfasst:
Bestimmen (1900), dass die Vorrichtung einen statischen oder semistatischen Standort aufweist;
Bestimmen (1902), ein Aktivierungssignal mit Phasenrotationen zu übertragen, um darauf basierend, dass die Vorrichtung einen statischen oder semistatischen Standort aufweist, ein passives Tag zu aktivieren;
und Übertragen des Aktivierungssignals mit Phasenrotationen,
wobei eine Anzahl und/oder Werte der Phasenrotationen auf mindestens einem von einer Wellenlänge des Aktivierungssignals, einem Abstand von der Vorrichtung zu einer anderen Vorrichtung, die dazu ausgelegt ist, das Aktivierungssignal ohne Phasenrotationen zu übertragen, einem Abstand von der Vorrichtung zu einem Reflektor oder einem Abstand von einer anderen Vorrichtung, die dazu ausgelegt ist, das Aktivierungssignal ohne Phasenrotationen zu einem Reflektor zu übertragen, basieren.

15. Computerprogramm, das computerausführbare Anweisungen umfasst, die, wenn sie auf einem oder mehreren Prozessoren ausgeführt werden, den einen oder die mehreren Prozessoren veranlassen, die Schritte des Verfahrens nach Anspruch 14 durchzuführen.

## Revendications

1. Appareil comprenant :
des moyens pour déterminer (1900) que l'appareil a un emplacement statique ou semi-statique ;
des moyens pour déterminer (1902) de transmettre un signal d'activation avec des rotations de phase pour activer une étiquette passive lorsque l'appareil a un emplacement statique ou semi-statique ; et
des moyens pour transmettre le signal d'activation avec des rotations de phase,
dans lequel un nombre et/ou des valeurs des rotations de phase sont basés sur au moins une parmi une longueur d'onde du signal d'activation, une distance entre l'appareil et un autre appareil configuré pour transmettre le signal d'activation sans rotations de phase, une distance entre l'appareil et un réflecteur ou une distance entre un autre appareil configuré pour transmettre le signal d'activation sans rotations de phase et un réflecteur.

2. Appareil selon la revendication 1, comprenant :
des moyens pour déterminer que l'appareil a reçu un message de configuration pour transmettre le signal d'activation avec des rotations de phase ; et
des moyens pour déterminer de transmettre le signal d'activation avec des rotations de phase lorsque l'appareil a reçu le message de configuration pour transmettre le signal d'activation avec des rotations de phase.

3. Appareil selon la revendication 2, comprenant :
des moyens pour déterminer le nombre et/ou les valeurs des rotations de phase ; et
des moyens pour transmettre le signal d'activation avec une rotation de phase sur la base du nombre et/ou les valeurs des rotations de phase.

4. Appareil selon la revendication 3, comprenant :
des moyens pour déterminer la longueur d'onde du signal d'activation ; et
des moyens pour déterminer le nombre et/ou les valeurs des rotations de phase sur la base de la longueur d'onde du signal d'activation.

5. Appareil selon la revendication 3 ou la revendication 4, comprenant :
des moyens pour déterminer la distance entre l'appareil et un autre appareil configuré pour transmettre le signal d'activation sans rotations de phase ; et
des moyens pour déterminer le nombre et/ou les valeurs des rotations de phase sur la base de la distance entre l'appareil et l'autre appareil.

6. Appareil selon la revendication 3 ou la revendication 4, comprenant :
des moyens pour recevoir la distance entre l'appareil et un autre appareil configuré pour transmettre le signal d'activation sans rotations de phase déterminée par l'autre appareil ; et
des moyens pour déterminer le nombre et/ou les valeurs des rotations de phase sur la base de la distance entre l'appareil et l'autre appareil.

7. Appareil selon l'une des revendications 3 à 6, comprenant :
des moyens pour déterminer la distance entre l'appareil et un réflecteur ; et
des moyens pour déterminer le nombre et/ou les valeurs des rotations de phase sur la base de la distance entre l'appareil et le réflecteur.

8. Appareil selon l'une des revendications 3 à 6, comprenant :
des moyens pour recevoir la distance entre l'autre appareil et un réflecteur déterminée par un autre appareil configuré pour transmettre le signal d'activation sans rotations de phase ; et
des moyens pour déterminer le nombre et/ou les valeurs des rotations de phase sur la base de la distance entre l'autre appareil et le réflecteur.

9. Appareil selon l'une des revendications 5 à 8, comprenant :
des moyens pour déterminer une distance maximale parmi la distance entre l'appareil et l'autre appareil, la distance entre l'appareil et le réflecteur et/ou la distance entre l'autre appareil et le réflecteur ; et
des moyens pour déterminer le nombre et/ou les valeurs des rotations de phase sur la base de la distance maximale.

10. Appareil selon la revendication 9, comprenant :
des moyens pour déterminer un premier nombre et/ou des premières valeurs des rotations de phase lorsque la distance maximale est inférieure à un premier nombre de longueurs d'onde du signal d'activation ;
des moyens pour déterminer un deuxième nombre et/ou des deuxièmes valeurs des rotations de phase lorsque la distance maximale est supérieure au premier nombre de longueurs d'onde du signal d'activation et inférieure à un deuxième nombre de longueurs d'onde du signal d'activation ; ou
des moyens pour déterminer un troisième nombre et/ou des troisièmes valeurs des rotations de phase lorsque la distance maximale est supérieure au deuxième nombre de longueurs d'onde du signal d'activation et inférieure à un troisième nombre de longueurs d'onde du signal d'activation.

11. Appareil selon l'une des revendications 1 à 10, comprenant :
des moyens pour recevoir une allocation de ressources pour transmettre le signal d'activation ; et
des moyens pour transmettre le signal d'activation avec des rotations de phase sur la base de l'allocation de ressources.

12. Appareil selon l'une des revendications 1 à 11, dans lequel l'appareil est un activateur.

13. Appareil selon la revendication 12, dans lequel l'appareil est un équipement utilisateur ou un point d'accès sans fil fixe.

14. Procédé réalisé par un appareil, le procédé comprenant les étapes suivantes :
déterminer (1900) que l'appareil a un emplacement statique ou semi-statique ;
déterminer (1902) de transmettre un signal d'activation avec des rotations de phase pour activer une étiquette passive lorsque l'appareil a un emplacement statique ou semi-statique ; et
transmettre le signal d'activation avec des rotations de phase,
dans lequel un nombre et/ou des valeurs des rotations de phase sont basés sur au moins une parmi une longueur d'onde du signal d'activation, une distance entre l'appareil et un autre appareil configuré pour transmettre le signal d'activation sans rotations de phase, une distance entre l'appareil et un réflecteur ou une distance entre un autre appareil configuré pour transmettre le signal d'activation sans rotations de phase et un réflecteur.

15. Programme informatique comprenant des instructions exécutables par ordinateur qui, lorsqu'elles sont exécutées sur un ou plusieurs processeurs, amènent les un ou plusieurs processeurs à effectuer les étapes du procédé selon la revendication 14.
